# EUROPÄISCHE PATENTANMELDUNG

(11) **EP 4 224 598 A1**
(43) Veröffentlichungstag der Anmeldung: **09.08.2023**
(21) Anmeldenummer: 23152515.5
(22) Anmeldetag: 19.01.2023
(51) Int. Cl.: H01M 10/54, B09B 3/32, B07B 4/00, B29B 17/02, B03B 9/06, B09B 101/16

(54) **AUFBEREITUNG VON THERMISCH VORBEHANDELTEN UND UNBEHANDELTEN BATTERIEN SOWIE DERER PRODUKTIONSAUSSCHÜSSE**

(30) Priorität: 08.02.2022 DE 102022102919
(71) Anmelder: REDUX Recycling GmbH, 63073 Offenbach (DE)
(72) Erfinder: Kiselew, Waldemar, 27639 Wurster Nordseeküste (DE); Arnberger, Astrid, 1220 Wien (AT)
(74) Vertreter: Dilg, Haeusler, Schindelmann Patentanwaltsgesellschaft mbH

(57) **Zusammenfassung**

Die vorliegende Erfindung betrifft ein System (100) zum Aufbereiten von Batterieabfällen (150). Das System weist eine Aufschlussvorrichtung (101) zum mechanischen Aufschließen der Batterieabfälle (150) in einen, insbesondere streifenförmigen oder flakeförmigen, Leichtstoffanteil (151) und einen Schwerstoffanteil (152). Die Aufschlussvorrichtung (101) weist einen Ausgang (102) zum gemeinsamen Austragen des Leichtstoffanteils (151) und des Schwerstoffanteils (152) auf. Ferner weist das System (100) eine Trenneinrichtung (103) zum Trennen des Leichtstoffanteils (151) von dem Schwerstoffanteil (152) auf, wobei die Trenneinrichtung (103) mit der Aufschlussvorrichtung (101) zum Erhalt des Leichtstoffanteils (151) und des Schwerstoffanteils (152) gekoppelt ist. Ferner weist das System (100) eine Faserkompaktoreinrichtung (104) auf, wobei die Faserkompaktoreinrichtung (104) mit der Trenneinrichtung (103) zum Erhalt des Leichtstoffanteils (151) gekoppelt ist. Die Faserkompaktoreinrichtung (104) ist konfiguriert, den Leichtstoffanteil (151) unter Trennung eines weiteren Aktivmaterials (153) zu kompaktieren.

## Beschreibung

### Technisches Gebiet

Die vorliegende Erfindung betrifft ein System und ein Verfahren zum Aufbereiten von Batterieabfällen.

### Hintergrund der Erfindung

Bei der Herstellung von aufladbaren Batterien, insbesondere bei LithiumIonenbatterien, fallen Produktionsausschüsse in großen Mengen an. Bei den Produktionsausschüssen (sog. Bicells) handelt es sich insbesondere um bereits gestapelte Elektrodenpakete (sog. Anode-Separator-Kathode-Separator Einheiten), welche noch nicht mit dem Elektrolyten der Batterie versetzt wurden. Ferner ist es notwendig, auch komplette Batterien, d.h. mit Gehäuse mit und ohne Elektrolyt, aufzubereiten.

Ein Beispiel für recyclebare Komponenten einer Batterie sind z.B. Elektrodenfolien oder Kunststoffseparatoren. Ein solcher Separator hat die Aufgabe, Elektrodenfolien, die als Kathode und als Anode ausgebildet sein können, elektrisch voneinander zu trennen und den Ionenaustausch zu gewährleisten. Die ionen-durchlässige Membran eines Separators besteht zum Großteil aus Kunststoffmaterial, wie z.B. aus Polymeren, z.B. Polyethylen (PE) und Polypropylen (PP).

In einem Recyclingbetrieb von Lithiumionenbatterien kann vor der mechanischen Aufbereitung eine thermische Vorbehandlung erfolgen. Im thermischen Behandlungsschritt wird z.B. der Separator verbrannt und stellt für die weitere Behandlung kein Hindernis mehr dar. Bei der mechanischen Aufbereitung können z.B. lange Polymer-Schnüre entstehen, die sich zum Teil verklumpen und verfangen, zu Produktionsstillständen sowie Verstopfungen in den Rohrleitungen bzw. der Förderstrecke hervorrufen.

### Darstellung der Erfindung

Es ist eine Aufgabe der vorliegenden Erfindung, eine Recycling- bzw. Aufbereitungsmöglichkeit für Batterieabfälle bereitzustellen, welche mit oder ohne thermische Vorbehandlungsverfahren einen robusten und störungsfreien Anlagenbetrieb gewährleistet.

Diese Aufgabe wird mit einem System und einem Verfahren zum Aufbereiten von Batterieabfällen gemäß den unabhängigen Ansprüchen gelöst.

Gemäß einem ersten Aspekt der vorliegenden Erfindung wird ein System zum Aufbereiten von Batterieabfällen beschrieben. Das System weist eine Aufschlussvorrichtung auf zum mechanischen Aufschließen der Batterieabfälle in einen, insbesondere streifenförmigen, faserförmig oder flakeförmigen (flockenförmigen), Leichtstoffanteil und einen Schwerstoffanteil, wobei die Aufschlussvorrichtung einen Ausgang zum gemeinsamen Austragen des Leichtstoffanteils und des Schwerstoffanteils aufweist.

Ferner weist das System eine Trenneinrichtung zum Trennen des Leichtstoffanteils von dem Schwerstoffanteil auf, wobei die Trenneinrichtung mit der Aufschlussvorrichtung zum Erhalt des Leichtstoffanteils und des Schwerstoffanteils gekoppelt ist.

Ferner weist das System eine Faserkompaktoreinrichtung auf, wobei die Faserkompaktoreinrichtung mit der Trenneinrichtung zum Erhalt des Leichtstoffanteils gekoppelt ist. Die Faserkompaktoreinrichtung ist konfiguriert, den Leichtstoffanteil unter Trennung eines weiteren Schwerstoffanteils oder weiteren Aktivmaterials zu kompaktieren.

Gemäß einem weiteren Aspekt der vorliegenden Erfindung wird ein Verfahren zum Aufbereiten von Batterieabfällen, insbesondere mit dem oben genannten System, beschrieben. Der Batterieabfall wird mechanisch aufgeschlossen mittels einer Aufschlussvorrichtung in einen, insbesondere streifenförmigen oder flakeförmigen, Leichtstoffanteil und einen Schwerstoffanteil, wobei die Aufschlussvorrichtung einen Ausgang zum gemeinsamen Austragen des Leichtstoffanteils und des Schwerstoffanteils aufweist. Das Verfahren weist ferner ein Trennen des Leichtstoffanteils von dem Schwerstoffanteil mittels einer Trenneinrichtung auf, wobei die Trenneinrichtung mit der Aufschlussvorrichtung zum Erhalt des Leichtstoffanteils und des Schwerstoffanteils gekoppelt ist. Ferner weist das Verfahren ein Kompaktieren des Leichtstoffanteils unter Trennung eines weiteren Aktivmaterials oder weiteren Schwerstoffanteils mittels einer Faserkompaktoreinrichtung auf, wobei die Faserkompaktoreinrichtung mit der Trenneinrichtung zum Erhalt des Leichtstoffanteils gekoppelt ist.

Mit dem erfindungsgemäßen System können Batterieabfälle aufbereitet werden. Unter Aufbereitung wird verstanden, dass die Batterieabfälle derart aufbereitet, d. h. separiert, getrennt und einzeln weiterbefördert, werden, dass die Wertstoffe in den Batterieabfällen weiterverarbeitet werden können. Ein Batterieabfall gemäß der vorliegenden Erfindung besteht beispielsweise aus einer vollständigen Batterie, die entsprechende Elektrodenfolien und Kunststoffseparatoren in einem Gehäuse aufweist. Mit anderen Worten kann als Batterieabfall eine Batterie einschließlich ihres Gehäuses verstanden werden, die beispielsweise zur Aufbereitung thermisch vorbehandelt ist (zum Bereinigen von Elektrolyten) oder thermisch unbehandelt ist. Dabei kann die Batterie beispielsweise in einer Aufgabevorrichtung vorzerkleinert werden oder unzerkleinert direkt der mechanischen Aufschlussvorrichtung zugeführt werden. Ferner kann die Batterie einen Elektrolyt aufweisen. Alternativ kann vor dem Zuführen der Aufschlussvorrichtung der Elektrolyt von der Batterie entfernt werden.

Das Gehäuse einer Batterie weist beispielsweise Stahl oder Aluminium auf. In dem Gehäuse liegen die Elektrodenfolien vor, welche beispielsweise als Anode oder Kathode fungieren können. Die Elektrodenfolie weist dabei zwei Schichten von Metalloxiden (zum Beispiel Nickel, Kobalt), Metallphosphate und/oder Graphit auf, die durch eine zentrale Schicht, beispielsweise aus Aluminium und Kupfer, getrennt werden. Die Elektrodenfolien, die als Kathode einerseits und als Anode andererseits fungieren, werden durch einen Kunststoffseparator getrennt. In der verbauten Batteriezelle hat der Kunststoffseparator insbesondere die Aufgabe, die Kathode und die Anode elektrisch voneinander zu trennen und den Ionenaustausch zu gewährleisten. Der Kunststoffanteil bildet somit eine ionendurchlässige Membran aus. Der Kunststoffseparator ist dabei bandförmig ausgebildet und weist einen Leichtstoffanteil (z.B. Polymere, z.B. Polyethylen (PE) und Polypropylen (PP))) auf.

Als Batterieabfall können wie eingangs erläutert vollständige gebrauchte Batterien oder Elemente von Batterien verstanden werden. Ferner kann als Batterieabfall ebenfalls ein Ausschussaus der Batterieherstellung verstanden werden. Der Batterieabfall weist einen Leichtstoffanteil (z.B. Feinpartikel aus Aktivmaterial oder Kunststoff) auf. Der Leichtstoffanteil kann nach der Aufschließung in der Aufschlussvorrichtung bandförmig bzw. flakeförmig und flexibel vorliegen.

Ziel bei der Aufbereitung von Batterieabfällen gemäß dem vorliegenden System ist es, Wertstoffe, wie beispielsweise Metalle, Aktivmaterial und Kunststoffe zu trennen und separat weiter zu verwerten.

Ein Metallanteil aus einem Batterieabfall weist insbesondere Stahl, Aluminium, Kupfer und/oder Verbindungen derselben auf.

Ein Aktivmaterialanteil weist insbesondere Nickel, Kobalt, Metalloxid, Metallphosphate, Graphit und/oder Verbindungen derselben auf. Aktivmaterial wird insbesondere durch die Elektrodenfolien, die als Kathode oder Anode in der Batterie fungieren, eingetragen.

Der Kunststoffanteil kann beispielsweise aus Polymeren, z.B. Polyethylen (PE) und Polypropylen (PP), bestehen. Der Kunststoffanteil wird insbesondere durch die Kunststoffseparatoren in der Batterie eingetragen.

Unter dem Begriff "Leichtstoffanteil" wird ein Teil des Batterieabfalls verstanden, welcher gegenüber einem Schwerstoffanteil leichter ist und/oder in kleinere Fraktionen vorliegt als der Schwerstoffanteil. Ferner wird der Leichtstoffanteil dahingehend definiert, dass ein äquivalenter aerodynamischer Partikeldurchmesser des Leichtstoffanteils größer ist als der eines Schwerstoffanteils, sodass bei Einwirken einer Strömung die Leichtstoffanteile aufgrund der aerodynamischen Vorteile mit einer Strömung leichter mitströmen als ein Schwerstoffanteil. Der Leichtstoffanteil besteht beispielsweise aus dem oben beschriebenen Aktivmaterial und/oder den Kunststoffmaterial.

Der Schwerstoffanteil weist insbesondere Metallbestandteile, wie beispielsweise Stahl, Kupfer oder Aluminium (beispielsweise aus dem Zellgehäuse der Batterie) auf. Ferner kann der Schwerstoffanteil ebenfalls Aktivmaterial aufweisen, welches nicht mit dem Leichtstoffanteil ausgetragen wurde.

Ziel bei der Aufbereitung bzw. dem Recycling von Batterieabfällen ist die Trennung und entsprechende Wiederverwertbarkeit der Schwerstoffanteile und des Leichtstoffanteils. Hierfür ist zunächst ein mechanisches Aufschlussverfahren, d. h. eine Zersetzung der Batterieabfälle in einen Schwerstoffanteil und einen Leichtstoffanteil in der Aufschlussvorrichtung vorgesehen. Der Aufschluss des Leichtstoffanteils von den Schwerstoffanteilen wird erfindungsgemäß mechanisch mittels einer Aufschlussvorrichtung erzielt. In der Aufschlussvorrichtung werden mittels Zerkleinerns, Schredderns, Zerdrückens, Zerschneidens und Reißen die Batterieabfälle in den Leichtstoffanteil und den Schwerstoffanteil aufgeschlossen. Dabei bildet der Leichtstoffanteil fadenförmige und flockenförmige Strukturen aus, die eine Verstopfung bewirken können. Der Schwerstoffanteil, welcher z.B. aus metallischen Bestandteilen besteht, verkugelt sich, sodass neben dem fadenförmigen Leichtstoffanteil auch kugelförmige Metallpartikel, sowie feinkörnige Oxide und Phosphate vorliegen. Aufgrund des erfindungsgemäßen mechanischen Aufschließens kann auf Mittel zur chemischen oder thermischen Zersetzung des Leichtstoffanteils, insbesondere des Kunststoffanteils, verzichtet werden und somit der mechanisch gewonnene Leichtstoffanteil weiterverarbeitet werden. Insbesondere kann somit ein umweltschonenderes Trennsystem bereitgestellt werden.

Die Aufschlussvorrichtung weist einen Ausgang auf, durch welchen der aufgeschlossene Leichtstoffanteil und der Schwerstoffanteil ausgetragen werden kann und an die Trenneinrichtung zum Trennen (räumlichen Trennen) des Leichtstoffanteils von dem Schwerstoffanteil befördert wird. Der Ausgang kann dabei insbesondere eine Verschließeinrichtung aufweisen, wie beispielsweise die unten genannte Klappe, sodass gezielt und gesteuert der Ausgang verschlossen werden kann.

In der Trenneinrichtung wird die aufgeschlossene Vermengung an Leichtstoffanteil und Schwerstoffanteilen räumlich getrennt und insbesondere getrennt ausgeführt. In der Trenneinrichtung können verschiedene mechanische Trennmechanismen eingesetzt werden. Beispielsweise kann die Trennvorrichtung nach Art eines Windsichtersystems, wie unten im Detail beschrieben, den Leichtstoffanteil von dem Schwerstoffanteil trennen.

Der getrennte Leichtstoffanteil wird zu der Faserkompaktoreinrichtung befördert. Somit wird insbesondere, vor einer weiteren Aufbereitung und Trennung der einzelnen Materialanteile im Schwerstoffanteil, der Leichtstoffanteil separiert und in der Faserkompaktoreinrichtung weiterverarbeitet. Da der Leichtstoffanteil aus einer Vielzahl an fadenartigen Ausformungen besteht, wird durch die Abtrennung des Leichtstoffanteils, vor der weiteren Bearbeitung des Schwerstoffanteils, das Risiko ausgeschlossen, dass der fadenartige Leichtstoffanteil die später eingesetzten Aufbereitungseinrichtungen für die Schwerstoffanteile, wie beispielsweise magnetische Trenneinrichtungen, Siebe oder dergleichen, verstopft.

In der Faserkompaktoreinrichtung werden die Leichtstoffanteile mechanisch kompaktiert und entsprechend in einer Verladestation in einen Ladecontainer oder in einer anderen Ladeverpackung, wie beispielsweise einem Big-Bag, gesammelt und zum weiteren Transport vorbereitet. Bei der mechanischen Kompaktierung werden weitere Aktivmaterialien, die sich in der Aufschlussvorrichtung noch nicht von dem restlichen Leichtstoffanteil, z.B. Kunststoffen, getrennt haben, gelöst. In der Faserkompaktoreinrichtung können ebenfalls diese weiteren Aktivmaterialien abgeführt werden und für das Weiterverarbeiten vorgesehen werden.

Gemäß einer weiteren beispielhaften Ausführungsform bildet die mechanische Aufschlussvorrichtung einen Prallreaktor, insbesondere mit einem Shredderrotor, aus. Der Shredderrotor verkleinert und zermalmt die einfallenden Batterieabfälle, sodass ein Aufschluss in Leichtstoffanteil und den Schwerstoffanteil ermöglicht wird. Der Shredderrotor kann insbesondere um eine horizontale oder vertikale Achse rotiert werden. Insbesondere die Metallbestandteile des Schwerstoffanteils werden hierbei kugelförmig und sozusagen verkugelt. Durch die Einwirkung von Prall auf die Batterieabfälle wird der Aufschluss der Leichtstoffanteile und Schwerstoffanteile ermöglicht.

Die Aufschlussvorrichtung kann ebenfalls als Prallmühle oder als Querstromzerspaner ausgebildet sein.

Gemäß einer weiteren beispielhaften Ausführungsform weist die Aufschlussvorrichtung einen oberen Eingang zum Einfüllen der Batterieabfälle auf. Die Batterieabfälle sind mittels Stetigförderer, z.B. Schneckenförderer, Bandförderer, Becherförderer, Seilförderer, insbesondere mittels eines Steigförderers zu dem Eingang förderbar. Die Batterieabfälle fallen somit schwerkraftbasierend von oben in die Aufschlussvorrichtung. Somit lösen sich die Batterieabfälle während des freien Falls in die Aufschlussvorrichtung bereits leicht voneinander, sodass ein effektives Aufnehmen beispielsweise durch den Shredderrotor und eine effektivere Trennung des Leichtstoffanteils von dem Schwerstoffanteil ermöglicht wird.

Die Batterieabfälle werden beispielsweise in gedeckelten, verschlossenen Paloxen bzw. Containern angeliefert und per Stapler der Anlage, beispielsweise dem Steigförderer, in einer Aufgabevorrichtung zugeführt. Die Paloxen werden dazu vom Bediener in eine stationäre Hebe-Kipp-Vorrichtung gestellt, die die Beschickung z.B. eines Aufgabetrichters vornimmt. Der Aufgabetrichter befindet sich über dem Dosierer, der eine kontinuierliche Beschickung der nachfolgenden Aufbereitung, d.h. eine Beschickung des Steigförderers und entsprechend der Aufschlussvorrichtung, um einen möglichst gleichmäßigem Massenstrom zu gewährleisten. Die Batterieabfälle gelangen anschließend über den Steigförderer in den z.B. Prallreaktor als Aufschlussvorrichtung.

Die gesamte Beschickungslinie ist dicht ausgeführt und die Hebe-Kipp-Vorrichtung wird an mehreren Stellen abgesaugt. Weiterhin erfolgt eine Absaugung durch den Unterdruck im Prallreaktor durch die gesamte Aufgabestrecke hindurch. Durch eine zentrale Gebläsevorrichtung kann somit ein Luftstrom erzeugt werden, der bereits gelöste Leichtstoffanteile, z.B. Elektrodenfolien, die während der Beschickung der Aufschlussvorrichtung gelöst werden, in die Aufschlussvorrichtung hineinsaugt, um die Umgebung nicht zu verunreinigen.

Gemäß einer weiteren beispielhaften Ausführungsform ist der Ausgang der Aufschlussvorrichtung derart verschließbar, insbesondere mittels einer steuerbaren Klappe, dass der Ausgang zum Herausfördern der aufgeschlossenen Leichtstoffanteile und Schwerstoffanteile aus der Aufschlussvorrichtung selektiv (d. h. gesteuert) geöffnet werden kann.

Gemäß einer weiteren beispielhaften Ausführungsform ist die Klappe eingerichtet, sequenziell zu Öffnen und für eine vorbestimmte Austragsdauer den Leichtstoffanteil und den Schwerstoffanteil durch den Ausgang auszutragen, wobei die Austragsdauer 0,25 min bis 5 min, insbesondere 2 min beträgt. Die Aufschlussvorrichtung kann beispielsweise im Batchbetrieb betrieben werden, sodass beispielsweise während einer bestimmten Zeitdauer, Batterieabfälle aufgeschlossen, d.h. z.B. geschreddert, zermalmt etc., bevor die Klappe den Ausgang öffnet und die aufgeschlossenen Batterieabfälle weiter zu der Trennvorrichtung insbesondere kontinuierlich oder diskontinuierlich ausgetragen und befördert werden.

Gemäß einer weiteren beispielhaften Ausführungsform ist die Trenneinrichtung direkt hinter dem Ausgang der Aufschlussvorrichtung angeordnet. Beispielsweise kann die Trenneinrichtung direkt an den Ausgang geflanscht werden, sodass die aufgeschlossenen Batterieabfälle direkt in die Trenneinrichtung aufgenommen werden. Alternativ dazu kann die Trenneinrichtung beabstandet von der Aufschlussvorrichtung angeordnet werden, dass die aufgeschlossenen Batterieabfälle über eine Förderstrecke, beispielsweise mittels eines Fließbandes oder eines Schneckenförderers, zwischen der Aufschlussvorrichtung und der Trenneinrichtung befördert werden.

Gemäß einer weiteren beispielhaften Ausführungsform weist die Trenneinrichtung ein Sieb auf zum Trennen des Leichtstoffanteils von dem Schwerstoffanteil. Aufgrund der fadenförmigen Ausprägung des Leichtstoffanteils nach der Aufschlussvorrichtung bleiben die Leichtstoffanteile in dem Sieb hängen, während die Schwerstoffanteile, beispielsweise die kugelförmigen Metallbestandteile, durch das Sieb gelangen können. Außerdem kann der Aktivmasseanteil, der noch nicht abgeschieden wurde, durch die Siebung abgetrennt werden.

Gemäß einer weiteren beispielhaften Ausführungsform fungiert die Trenneinrichtung als Strömungsklassierung, insbesondere nach Art des Windsichterprinzips. Die Trenneinrichtung weist entsprechend ein Gebläse zum Erzeugen eines Luftstroms auf. Das Gebläse ist derart steuerbar, dass mittels des Luftstroms der Leichtstoffanteil von dem Schwerstoffanteil trennbar und der Leichtstoffanteil zu der Faserkompaktoreinrichtung beförderbar ist. Der Luftstrom kann beispielsweise vertikal oder horizontal errichtet werden. Die leichteren Leichtstoffanteile werden von dem Luftstrom mitgerissen, während die schwereren Schwerstoffanteile, wie beispielsweise Metalle, den Luftstrom verlassen und somit ebenfalls von den Leichtstoffanteilen separiert werden.

Gemäß einer weiteren beispielhaften Ausführungsform weist die Trenneinrichtung ein Fallrohr auf, in welchem der Leichtstoffanteil und der Schwerstoffanteil lose, insbesondere vertikal fallend, entlang einer Förderrichtung beförderbar sind. Das Gebläse stellt den Luftstrom im Wesentlich derart bereit, dass mittels des Luftstroms der Leichtstoffanteil von dem Schwerstoffanteil trennbar ist. In einem konkreten Ausführungsbeispiel weist die Trennvorrichtung ein vertikales Fallrohr auf, wobei mittig von außen die aufgeschlossenen Batterieabfälle eingebracht werden. Der Luftstrom wird vertikal von unten nach oben durch das Fallrohr geführt. Somit werden die leichteren Leichtstoffanteile nach oben zu der Faserkompaktoreinrichtung getragen, während der schwerere Schwerstoffanteil schwerkraftbasiert nach unten fällt und dort weiterbefördert werden kann.

Gemäß einer beispielhaften Ausführungsform weist die Faserkompaktoreinrichtung ein Lochblech auf, auf welchem der Leichtstoffanteil ablagerbar ist, wobei ein Luftstrom aus der Trenneinrichtung den Leichtstoffanteil in die Faserkompaktoreinrichtung transportiert. Der Luftstrom ist derart ausgerichtet, dass der Luftstrom das Lochblech passiert und den Leichtstoffanteil gegen das Lochblech drückt und den weiteren Aktivmaterialanteil durch das Lochblech ausbläst. Die Faserkompaktoreinrichtung weist eine Abstreifeinrichtung zum Abstreichen des Leichtstoffanteils von dem Lochblech auf.

Der Leichtstoffanteil bleibt insbesondere aufgrund seiner faser- bzw. flakeartigen Ausprägung am Lochblech hängen. Ein weiterer Aktivmaterialanteil, wie beispielsweise oben aufgeführte Metalloxid, wie Nickel- oder Kobaltoxide, verbleiben im Luftstrom und passieren das Lochblech. Der weitere Aktivmaterialanteil kann später durch einen Zyklonabscheider und durch einen Filter von dem Luftstrom getrennt werden.

Durch den Druck des Luftstroms auf den Leichtstoffanteil, der am Lochblech anhaftet, wird eine Kompaktierung erzielt. Dies wird zudem verstärkt, da entweder kontinuierlich oder sequenziell ein Abstreifen bzw. Abschaben des anhaftenden Leichtstoffanteils, z.B. mittels einer rotierenden Schnecke, am Lochblech durchgeführt wird und dieser dann gelöste und kompaktierte Leichtstoffanteil an einer Verladestation, die an der Faserkompaktoreinrichtung gekoppelt ist, gesammelt werden können.

Gemäß einer weiteren beispielhaften Ausführungsform weist die Faserkompaktoreinrichtung eine Zykloneinheit mit einem Dralltopf und einer Pressvorrichtung auf. Ein Luftstrom aus der Trenneinrichtung und/oder der Absaugstrom aus der Aufschlussvorrichtung aufweisend den Leichtstoffanteil ist in den Zykloneinheit einströmbar, wobei der Luftstrom derart ausgerichtet ist, dass der Luftstrom in dem Zykloneinheit zirkuliert und dabei den Leichtstoffanteil von dem weiteren Aktivmaterialanteil trennt. Der Leichtstoffanteil wird nach unten, in den Dralltopf, befördert. Der Dralltopf ist mit der Pressvorrichtung derart gekoppelt, dass der Leichtstoffanteil der Pressvorrichtung zuführbar ist. Die Pressvorrichtung ist ausgebildet, den Leichtstoffanteil zu komprimieren. Der weitere Aktivmaterialanteil ist zusammen mit dem Luftstrom aus dem Dralltopf getrennt von dem Leichtstoffanteil auströmbar. Die Pressvorrichtung ist insbesondere eine Kollergangpresse, eine Walzenpresse oder eine Brikettierungspresse.

Gemäß einer weiteren beispielhaften Ausführungsform weist das System eine Korngrößenseparationseinrichtung, welche mit der Trenneinrichtung zum Erhalt des Schwerstoffanteils gekoppelt ist, auf. Die Korngrößenseparationseinrichtung ist eingerichtet, den Metallanteil und einen Aktivmaterialanteil, insbesondere nach Korngrößen, zu separieren. Der Metallanteil weist insbesondere Stahl, Aluminium, Kupfer und/oder Verbindungen derselben auf. Der Aktivmaterialanteil besteht insbesondere aus Nickel- und Kobaltoxiden, sowie den oben genannten Verbindungen.

Gemäß einer weiteren beispielhaften Ausführungsform weist das System eine Metallseparationseinrichtung auf, welche mit der Korngrößenseparationseinrichtung zum Erhalt des Metallanteils gekoppelt ist, wobei die Metallseparationseinrichtung eingerichtet ist, den Metallanteil entsprechend der elektrischen Leitfähigkeit bzw. magnetischen Eigenschaft zu trennen. Mit der Metallseparationseinrichtung werden insbesondere leitfähige und nichtleitfähige, bzw. magnetische und nichtmagnetische Fraktionen des Metallanteils aufgeteilt. Beispielsweise kann eine Stahl- (Fe) Fraktion, eine Aluminium-Kupfer Fraktion und eine reine Aluminiumfraktion anhand ihrer elektrischen Leitfähigkeit bzw. magnetischen Eigenschaft getrennt und separiert werden. Die Metallseparationseinrichtung kann beispielsweise eine Trenneinrichtung darstellen, die Partikel je nach ihrer magnetischen Eigenschaft von denen anderer Partikel trennt. Die Metallseparationseinrichtung kann aus der Gruppe der Magnetabscheider ausgewählt sein, bestehend aus z.B. einem Gitter- oder Stabmagnetabscheider, einem Überband-Magnetabscheider, Magnetplatten, Magnettrommeln und Magnetwalzen, oder ein Wirbelstromabscheider für Nichteisenmetalle, sowie Edelstahlscheider und Separatoren zur Trennung von Edelstahlanteilen.

Gemäß einer weiteren beispielhaften Ausführungsform weist das System eine Absaugeinrichtung auf, welche derart mit der Aufschlussvorrichtung gekoppelt ist, dass ein Absaugstrom erzeugbar ist, welcher einen weiteren Teil des Leichtstoffanteils aus der Aufschlusseinrichtung absaugt.

Der Absaugstrom kann an die Materialzusammensetzung wie auch an die Partikelgrößen des Leichtstoffanteils angepasst werden. Beispielsweise kann die Absaugeinrichtung einen Volumenstrom zwischen 5000 m³/h und 35000 m³/h, insbesondere zwischen 8000 m³/h und 30000 m³/h, weiter insbesondere zwischen 12000 m³/h und 28000 m³/h einstellen.

Gemäß einer weiteren beispielhaften Ausführungsform wobei die Aufschlussvorrichtung ein integriertes Trennsystem, insbesondere ein Windsichtersystem, aufweist, welches derart ausgebildet ist, dass der weitere Teil des Leichtstoffanteils von dem am Ausgang ausgetragenen Schwerstoffanteil und Leichtstoffanteil trennbar ist.

Das Trennsystem in der Aufschlussvorrichtung weist z.B. einen Abweiseradsichter, Gegenstromsichter, oder Umlenksichter auf, wobei z.B. ein Abweiserad mit einem beschaufelten Rotor eingesetzt wird. Durch geregelte Anpassung der Umfangsgeschwindigkeit und der Luftmenge des Absaugstroms aus der Aufschlussvorrichtung ist eine gezielte Anpassung der Trennkorngröße (dt) möglich zwischen den Partikelgrößen des abgesaugten weiteren Leichtstoffanteils einerseits und beispielsweise des Schwerstoffanteils und des Leichtstoffanteils, welcher durch den Ausgang ausgetragen wird, andererseits. Mit der Abweiseradsichtung kann somit der abgesaugte weitere Leichtstoffanteil getrennt werden.

Bei der mechanischen Aufschlussvorrichtung entstehen durch das mechanische Aufschließen auch weitere Leichtstoffanteile, aufweisend Aktivmaterial und/oder Kunststoffe. Insbesondere weist das Aktivmaterial Nickel-, Kobaltoxide, Graphit bzw. Metallphosphate auf. Da der weitere Leichtstoffanteil staubartig in der Atmosphäre in der Aufschlussvorrichtung vorliegt, wird mittels der Absaugeinrichtung der weitere Leichtstoffanteil entnommen und zur Aufbereitung weitertransportiert. Gerade bei der Aufbereitung des weiteren Leichtstoffanteils, der aus der Aufschlussvorrichtung abgesaugt wird, hat sich herausgestellt, dass ein hoher Anteil von Aktivmaterial später, insbesondere im Zyklonabscheider und/oder einem nachgeschaltetem Staubfilter, zurückgewonnen werden kann.

Gemäß einer weiteren beispielhaften Ausführungsform weist das System einen Zyklonabscheider auf, welcher mit der Absaugeinrichtung derart gekoppelt ist, sodass der Absaugstrom in den Zyklonabscheider einströmbar ist. Der Zyklonabscheider ist konfiguriert, Feinpartikel von dem Absaugstrom zu separieren, wobei die Feinpartikel Aktivmaterial aufweisen, das insbesondere aus Nickel-, Cobaltoxide, Metallphosphate, Graphit oder deren Verbindungen besteht. Der Zyklonabscheider fungiert dahingehend, dass über Zentripetalkraft die Feinpartikel aus dem Absaugstrom getrennt werden und separat aufbereitet werden können.

Die Absaugeinrichtung kann eine Rückführung der von den Aktivmaterial und sonstigen Leichtstoffanteilen gereinigten Luft in die Aufschlussvorrichtung aufweisen. Dabei ergeben sich ein Verhältnis von Zuluft zu Umluft in der Aufschlussvorrichtung von 10% bis 90%, abhängig vom zu trennenden Materialstrom und dem Feinanteil (Staub), um die Umgebung nicht zu verunreinigen.

Gemäß einer weiteren beispielhaften Ausführungsform ist der Zyklonabscheider ferner mit der Faserkompaktoreinrichtung derart gekoppelt, dass das Aktivmaterial aus der Faserkompaktoreinrichtung dem Zyklonabscheider zuführbar ist. Somit kann auch zusätzlich das in der Faserkompaktoreinrichtung gewonnene Aktivmaterial von dem Luftstrom getrennt und weiterverarbeitet werden.

Generell kann im Zyklonabscheider, in dem Trennsystem der Aufschlussvorrichtung und/oder in der Faserkompaktoreinrichtung der Leichtstoffanteil in Kunststoffanteile [bzw. Reststoffe] und Aktivmaterial getrennt werden, indem mittels Einstellung des Gebläses und/oder der Absaugeinrichtung der Trennteilchendurchmesser auf einen gewünschten äquivalenten aerodynamischen Partikeldurchmesser (dae) der Faseranteile und Partikel des Leichtstoffanteils eingestellt wird. Dabei kann, abhängig vom zu trennenden Materialstrom, das Aktivmaterial vollständig vom z.B. Kunststoffanteil getrennt werden.

Gemäß einer weiteren beispielhaften Ausführungsform weist das System ein Gehäuse auf, in welchem zumindest die Aufschlussvorrichtung, die Trenneinrichtung und die Faserkompaktoreinrichtung angeordnet sind und von der Umgebung abgedichtet sind. Insbesondere können in der Aufschlussvorrichtung, wie auch der Trenneinrichtung oder der Faserkompaktoreinrichtung gesundheitsschädliche Feinstoffe entstehen, die die Umgebung kontaminieren. Aufgrund des umfassenden Gehäuses können die Feinstoffe innerhalb des Gehäuses gehalten werden und gezielt ausgefiltert werden. Über entsprechende Materialschleusen können beispielsweise die Batterieabfälle, beispielsweise über den oben beschriebenen Steigförderer, von der Aufgabevorrichtung in die Aufschlussvorrichtung eingebracht werden. Ferner können weitere Materialschleusen an den Verladestationen vorgesehen werden, sodass ein Materialaustrag der separierten Reststoffe aus dem Gehäuse ausgetauscht werden kann, ohne ungewollt die Feinpartikel auszutragen.

Gemäß einer weiteren beispielhaften Ausführungsform weist das Gehäuse zumindest eine Absaugöffnung auf, an welcher die Absaugeinrichtung koppelbar ist, wobei mittels der Absaugeinrichtung Luft aus dem Gehäuse als Abluft an die Umgebung abführbar ist. An der Absaugeinrichtung ist insbesondere ein Luftfilter angeordnet.

Gemäß einer weiteren beispielhaften Ausführungsform weist das System zumindest einen mechanischen Förderer, insbesondere einen Schneckenförderer, einen Trogkettenförderer, ein Förderband, ein Rohrkettenförderer, ein Seilförderer, einen Vibrationsförderer, ein Becherwerk, einen Elevatorförderer, einen Z-Förderer, einen Wellkantenförderer oder einen Kratzkettenförderer auf.

Der Förderer ist zum Transport des Leichtstoffanteils und des Schwerstoffanteils in die Trenneinrichtung zwischen dem Ausgang der Aufschlusseinrichtung und der Trenneinrichtung angeordnet. Ferner kann ein Förderer ebenfalls zwischen der Trenneinrichtung und der Metallseparationseinrichtung und weiter zwischen der Metallseparationseinrichtung und der Korngrößenseparationseinrichtung angeordnet werden. Mit den beispielhaften Förderern werden die Schwerstoffanteile durch direkte mechanische Kraftübertragung, d. h. nicht durch Luftströme, transportiert. Dies reduziert Verwirbelungen und entsprechend eine Kontaminierung der inneren Atmosphäre innerhalb des Systems/Gehäuses. Bevorzugt können ebenfalls geschlossene Förderer zum Einsatz kommen, wie beispielsweise ein oben aufgeführter geschlossener Schneckenförderer.

Mit dem Aufbereitungsprozess des beschriebenen erfindungsgemäßen Systems kann einerseits die Qualität der Outputfraktionen (Leichtstoffanteil und Schwerstoffanteile (insbesondere Metalle)) erhöht und andererseits die Leichtfraktion (Aktivmaterial und Kunststoffmaterial) rückgewonnen werden. Mittels der Abscheidung durch die Kombination aus Faserkompaktor und Zyklon kann besonders hochqualitatives Aktivmaterial wiedergewonnen werden. Durch die Luftaustragung wird noch eine gewisse Menge an Aktivmaterial, d.h. z.B. dem Nickel-Kobalt-Konzentrat bzw. Metallphosphat-Konzentrat, mitabgeschieden und mittels der Verdichtung des Leichtstoffanteils wird eine wesentliche Volumenreduktion der Outputfraktion erreicht.

Es wird darauf hingewiesen, dass Ausführungsformen der Erfindung mit Bezug auf unterschiedliche Erfindungsgegenstände beschrieben wurden. Insbesondere sind einige Ausführungsformen der Erfindung mit Vorrichtungsansprüchen und andere Ausführungsformen der Erfindung mit Verfahrensansprüchen beschrieben. Dem Fachmann wird jedoch bei der Lektüre dieser Anmeldung sofort klarwerden, dass, sofern nicht explizit anders angegeben, zusätzlich zu einer Kombination von Merkmalen, die zu einem Typ von Erfindungsgegenstand gehören, auch eine beliebige Kombination von Merkmalen möglich ist, die zu unterschiedlichen Typen von Erfindungsgegenständen gehören.

### Kurze Beschreibung der Zeichnungen

Im Folgenden werden zur weiteren Erläuterung und zum besseren Verständnis der vorliegenden Erfindung Ausführungsbeispiele unter Bezugnahme auf die beigefügten Zeichnungen näher beschrieben. Es zeigen:
Fig. 1 zeigt eine schematische Darstellung des erfindungsgemäßen Systems gemäß einer beispielhaften Ausführungsform.
Fig. 2 zeigt eine schematische Darstellung der Faserkompaktoreinrichtung gemäß einer beispielhaften Ausführungsform.
Fig. 3 zeigt eine beispielhafte Darstellung einer Batterie als Batterieabfall.

### Detaillierte Beschreibung von exemplarischen Ausführungsformen

Gleiche oder ähnliche Komponenten in unterschiedlichen Figuren sind mit gleichen Bezugsziffern versehen. Die Darstellungen in den Figuren sind schematisch.

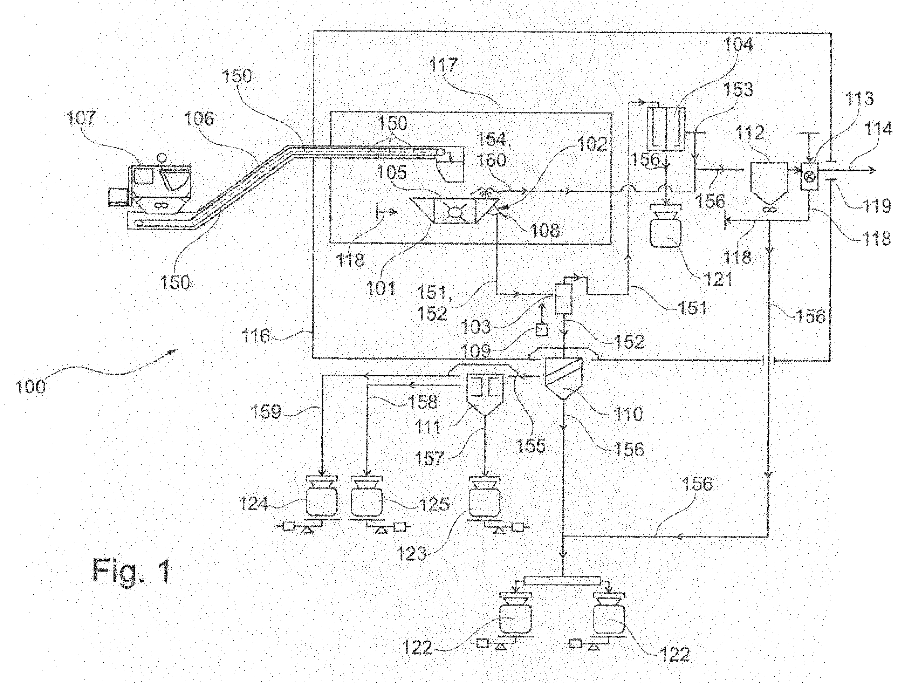

**Fig. 1** zeigt ein System 100 gemäß einer beispielhaften Ausführungsform. Die vorliegende Erfindung betrifft ein System 100 zum Aufbereiten von Batterieabfällen. Das System 100 weist eine Aufschlussvorrichtung 101 auf zum mechanischen Aufschließen der Batterieabfällen 150, z.B. Elektrodenfolien und Kunststoffseparatoren, insbesondere in streifenförmige oder flakeförmige, Leichtstoffanteile 151 und Schwerstoffanteile 152, wobei die Aufschlussvorrichtung 101 einen Ausgang 102 zum gemeinsamen Austragen des Leichtstoffanteils 151 und des Schwerstoffanteils 152 besitzt. Das System 100 weist eine Trenneinrichtung 103 auf zum Trennen des Leichtstoffanteils 151 von dem Schwerstoffanteil 152, wobei die Trenneinrichtung 103 mit der Aufschlussvorrichtung 101 zum Erhalt des Leichtstoffanteils 151 und des Schwerstoffanteils 152 gekoppelt ist. Das System 100 weist eine Faserkompaktoreinrichtung 104 auf, wobei die Faserkompaktoreinrichtung 104 mit der Trenneinrichtung 103 zum Erhalt des Leichtstoffanteils 151 gekoppelt ist, wobei die Faserkompaktoreinrichtung 104 konfiguriert ist, den Leichtstoffanteil 151 unter Trennung eines weiteren Aktivmaterial 153 zu kompaktieren.

Ziel bei der Aufbereitung bzw. dem Recycling von Batterieabfällen 150 ist die Trennung und entsprechende Wiederverwertbarkeit der Schwerstoffanteile 152, Aktivmaterialien 153, 156 und des Leichtstoffanteils 151, 160. Hierfür ist zunächst ein Aufschluss, d. h. eine Zersetzung, der Batterieabfälle150 in der Aufschlussvorrichtung 101 vorgesehen. Die Aufschließung des Leichtstoffanteils 151 von den Schwerstoffanteilen 152 wird erfindungsgemäß mechanisch mittels einer Aufschlussvorrichtung 101 erzielt. In der Aufschlussvorrichtung 101 wird mittels Zerkleinerns, Schredderns, Zerdrückens und Zerschneidens die Batterieabfälle150 in den Leichtstoffanteil 151 und den Schwerstoffanteil 152 aufgeschlossen. Dabei bildet insbesondere der Leichtstoffanteil 151 fadenförmiger Strukturen aus, die eine Verstopfung bewirken können. Der Schwerstoffanteil 152, welcher insbesondere aus verkugelten Metallbestandteilen besteht, sodass neben dem fadenförmigen Leichtstoffanteil 151 auch kugelförmige Metallpartikel vorliegen. Ferner entsteht bei der Aufschließung ein weiterer Leichtstoffanteil 160 und Aktivmaterial 156, welches an dem Leichtstoffanteil 160 anhaftet oder frei vorliegt. Diese Leichtstoffanteile 160 und Aktivmaterialien 156 können mittels einem Absaugstrom 154 aus der Aufschlussvorrichtung 101 abgesaugt werden.

Die Batterieabfälle 150 werden in gedeckelten, verschlossenen Paloxen angeliefert und per Stapler dem System 100, z.B. an einer Aufgabevorrichtung 107, zugeführt. Die Paloxen werden dazu vom Bediener in eine stationäre Hebe-Kipp-Vorrichtung gestellt, die die Beschickung des Aufgabetrichters vornimmt. Der Aufgabetrichter befindet sich über einem Dosierer, der eine kontinuierliche Beschickung der nachfolgenden Aufbereitung mit möglichst gleichmäßigem Massenstrom gewährleistet. Das Material gelangt anschließend über einen Steigförderer 106 in die Aufschlussvorrichtung 101, z.B. einem Prallreaktor.

Die Aufschlussvorrichtung 101 weist einen oberen Eingang 105 zum Einfüllen der Batterieabfälle 150 auf. Die Batterieabfälle 150 sind insbesondere mittels des Steigförderers 106 zu dem Eingang 105 förderbar. Die Batterieabfälle 150 fallen somit schwerkraftbasierend von oben in die Aufschlussvorrichtung 101. Somit lösen sich die Batterieabfälle 150 während des freien Falls in die Aufschlussvorrichtung 101 bereits leicht voneinander.

Die Aufschlussvorrichtung 101 (z.B. ein Prallreaktor) schließt die Batterieabfälle 150 auf und verkugelt die Schwerstoffanteile 152. Die Aufschlussvorrichtung 101 wird im Batchbetrieb mit einer Zykluszeit von ca. 10 oder weniger Minuten gefahren.

Die Aufschlussvorrichtung 101 weist einen Shredderrotor auf. Der Shredderrotor verkleinert und zermalmt die einfallenden Batterieabfälle 150, sodass ein Aufschluss in den Leichtstoffanteil 151, einen weiteren absaugbaren Leichtstoffanteil 160 und den Schwerstoffanteil 152 ermöglicht wird.

Der Ausgang 102 der Aufschlussvorrichtung 101 ist derart verschließbar, insbesondere mittels einer steuerbaren Klappe, dass der Ausgang zum Herausfördern der aufgeschlossenen Batterieabfälle 150 aus der Aufschlussvorrichtung selektiv (d. h. gesteuert) geöffnet werden kann. Gemäß einer weiteren beispielhaften Ausführungsform ist die Klappe 108 eingerichtet, sequenziell zu Öffnen und für eine vorbestimmte Austragsdauer den Leichtstoffanteil 151 und den Schwerstoffanteil 152 durch den Ausgang 102 auszutragen. Die Aufschlussvorrichtung 101 wird im Batchbetrieb betrieben, sodass beispielsweise während einer bestimmten Zeitdauer, Batterieabfälle 150 aufgeschlossen, d.h. z.B. geschreddert, zermalmt etc., bevor die Klappe 108 den Ausgang 102 öffnet und die aufgeschlossenen Batterieabfälle 150 weiter zu der Trennvorrichtung 103 ausgetragen und befördert werden.

Der Austrag aus der Aufschlussvorrichtung 101 erfolgt in zwei verschiedene Linien. Einerseits erfolgt nach Ablauf der einstellbaren Zykluszeit bzw. Batchbetriebs ein Austrag der Grobanteile, d.h. dem Leichtstoffanteil 151 und dem Schwerstoffanteil 152 durch die Klappe 108. Andererseits werden die weiteren Leichtstoffanteile 160 (z.B. Feinanteile bzw. Aktivmaterial wie, Nickel-Kobalt - Konzentrat) über lufttechnische Einrichtungen bzw. Absaugeinrichtungen 113 in einem Absaugstrom 154 abgesaugt. Der Absaugstrom 154 kann das Material kontinuierlich absaugen.

In der Trenneinrichtung 103 wird die aufgeschlossene Vermengung an Leichtstoffanteilen 151 und Schwerstoffanteilen 152 räumlich getrennt und insbesondere getrennt abgeführt. In der Trenneinrichtung 103 können verschiedene mechanische Trennmechanismen eingesetzt werden. Die Trenneinrichtung 103 kann nach Art des Windsichterprinzips fungieren. Die Trenneinrichtung 103 weist entsprechend ein Gebläse 109 zum Erzeugen eines Luftstroms auf. Das Gebläse 109 ist derart steuerbar, dass mittels des Luftstroms der leichtere Leichtstoffanteil 151 von dem Schwerstoffanteil 152 trennbar und der Leichtstoffanteil 151 zu der Faserkompaktoreinrichtung 104 beförderbar ist. Die Trenneinrichtung 103 weist ein Fallrohr auf, in welchem der Leichtstoffanteil 151 und der Schwerstoffanteil 152 lose, insbesondere vertikal fallend, entlang einer Förderrichtung beförderbar sind. Das Gebläse 109 stellt den Luftstrom im Wesentlich senkrecht zu der Förderrichtung bereit. Die Trennvorrichtung 103 weist ein vertikales Fallrohr auf, wobei mittig von außen die aufgeschlossenen Batterieabfälle 150 eingebracht werden. Der Luftstrom wird vertikal von unten nach oben durch das Fallrohr geführt. Somit werden die leichteren Leichtstoffanteile 151 nach oben zu der Faserkompaktoreinrichtung 104 getragen, während der schwerere Schwerstoffanteil 152 schwerkraftbasiert nach unten fällt und dort weiterbefördert werden kann.

Der getrennte Leichtstoffanteil 151 wird zu der Faserkompaktoreinrichtung 104 befördert. In der Faserkompaktoreinrichtung 104 werden die Leichtstoffanteile 151 mechanisch kompaktiert und entsprechend in einer Verladestation 121 in einen Ladecontainer oder in einer anderen Ladeverpackung, wie beispielsweise einem Big-Bag, gesammelt und zum weiteren Transport vorbereitet. Bei der mechanischen Kompaktierung werden weitere Aktivmaterialien 153, die sich in der Aufschlussvorrichtung 101 noch nicht von dem Leichtstoffanteil 151 oder Schwerstoffanteil 152 getrennt haben, gelöst. In der Faserkompaktoreinrichtung 104 können ebenfalls diese weiteren Aktivmaterialien 153, insbesondere Nickel- und Kobaltoxide, getrennt abgeführt werden.

Das System 100 weist ferner die Absaugeinrichtung 113 auf, welche derart mit der Aufschlussvorrichtung 101 gekoppelt ist, dass ein Absaugstrom erzeugbar ist, welcher einen weiteren Teil des Leichtstoffanteils 160 aus der Aufschlusseinrichtung 101 absaugt. Bei der mechanischen Aufschlussvorrichtung 101 entstehen durch das mechanische Aufschließen auch weitere leichtere Leichtstoffanteile 160. Insbesondere weist der weitere Leichtstoffanteile 160 Aktivmaterial 156, insbesondere Nickel- und Kobaltoxid, auf. Da diese weiteren Leichtstoffanteile 160 staubartig in der Atmosphäre in der Aufschlussvorrichtung 101 vorliegen können, werden mittels der Absaugeinrichtung 101 die weiteren Leichtstoffanteile 160 entnommen und zur Aufbereitung weitertransportiert.

Um den weiteren Teil des Leichtstoffanteils 160 von dem am Ausgang ausgetragenen Schwerstoffanteil 152 und Leichtstoffanteil 151 besser zu trennen, kann die Aufschlussvorrichtung 101 ein integriertes Trennsystem, insbesondere ein Windsichtersystem, aufweisen. Das Trennsystem in der Aufschlussvorrichtung weist z.B. einen Abweiseradsichter, Gegenstromsichter, oder Umlenksichter auf, wobei z.B. ein Abweiserad mit einem beschaufelten Rotor eingesetzt wird. Durch geregelte Anpassung der Umfangsgeschwindigkeit und der Luftmenge des Absaugstroms 154 aus der Aufschlussvorrichtung 101 ist eine gezielte Anpassung der Trennkorngröße (dt) möglich zwischen den Partikelgrößen des abgesaugten weiteren Leichtstoffanteils einerseits und beispielsweise des Schwerstoffanteils 152 und des Leichtstoffanteils 151, welcher durch den Ausgang 102 ausgetragen wird, andererseits. Mit der Abweiseradsichtung kann somit der abgesaugte weitere Leichtstoffanteil 160 getrennt werden.

Die Absaugeinrichtung 113 kann eine Rückführung bzw. einen Zustrom 118 der von den Aktivmaterial 153, 156 und sonstigen Leichtstoffanteilen 151, 160 gereinigten Luft in die Aufschlussvorrichtung 101 aufweisen. Dabei ergeben sich ein Verhältnis von Zuluft zu Umluft in der Aufschlussvorrichtung 101 von 10% bis 90%, abhängig vom zu trennenden Materialstrom und dem Feinanteil (Staub).

Das System 100 weist ferner einen Zyklonabscheider 112 auf, welcher mit der Absaugeinrichtung 113 derart gekoppelt ist, sodass der Absaugstrom 154 in den Zyklonabscheider 112 einströmbar ist. Der Zyklonabscheider 112 ist konfiguriert, das Aktivmaterial 156 von dem Absaugstrom 154 zu separieren, das insbesondere aus Nickel-, Kobaltoxid oder deren Verbindungen besteht. Der Zyklonabscheider 112 fungiert dahingehend, dass über Zentripetalkraft das Aktivmaterial 156 aus dem Abluftstrom getrennt werden und separat aufbereitet werden kann. Die Abluft 114 des Zyklonabscheiders 112 wird nach außen, z.B. über Luft/Staubfilter, ausgeblasen. Der Austrag aus dem Zyklonabscheider 112 erfolgt z.B. über eine Zellradschleuse. Das restliche Material landet im Staubfilter und mittels automatischer Druckluft-Abreinigung z.B. in einer Sammelschnecke. Über weitere Förderschnecken wird es zu einer Doppel-Verladestation 122 transportiert.

Der Zyklonabscheider 112 ist ferner mit der Faserkompaktoreinrichtung 104 derart gekoppelt, dass das weitere Aktivmaterial 153 aus der Faserkompaktoreinrichtung 104 dem Zyklonabscheider 112 zuführbar ist. Somit kann auch zusätzlich das in der Faserkompaktoreinrichtung 104 gewonnene Aktivmaterial 153 von dem Luftstrom getrennt und weiterverarbeitet werden.

Ferner weist das System 100 eine Korngrößenseparationseinrichtung 110, welche mit der Trenneinrichtung 103 zum Erhalt des Schwerstoffanteils 152 gekoppelt ist, auf. Die Korngrößenseparationseinrichtung 110 ist eingerichtet, den Metallanteil 155 und einen Aktivmaterialanteil 156, welcher insbesondere Nickel- und Kobaltoxid aufweist, nach Korngröße zu trennen. Der Metallanteil 155 weist insbesondere Stahl, Aluminium, Kupfer und/oder Verbindungen derselben auf. Über der Korngrößenseparationseinrichtung lässt sich der ggf. restliche bandförmige bzw. flakeförmige Leichtstoffanteil (Fasern) 152 ablagern und absaugen. Dieser Leichtstoffanteil 151 kann dann zu der Faserkompaktoreinrichtung 104 geführt werden.

Das System 100 weist ferner eine Metallseparationseinrichtung 111 auf, welche mit der Korngrößenseparationseinrichtung 110 zum Erhalt des Metallanteils 155 gekoppelt ist, wobei die Metallseparationseinrichtung 111 eingerichtet ist, den Metallanteil 155 entsprechend der elektrischen Leitfähigkeit bzw. magnetischen Eigenschaft zu trennen. Mit der Metallseparationseinrichtung 111 werden insbesondere leitfähige und nichtleifähige, bzw. magnetische und nichtmagnetische Fraktionen des Metallanteils 155 aufgeteilt. Beispielsweise kann eine Stahl- (Fe) Fraktion 157, eine Aluminium-Kupfer Fraktion 158 und eine reine Aluminiumfraktion 159 anhand ihrer elektrischen Leitfähigkeit bzw. magnetischen Eigenschaft getrennt und separiert werden.

Das System 100 weist ferner ein Gehäuse 116 auf, in welchem zumindest die Aufschlussvorrichtung 101, die Trenneinrichtung 103 und die Faserkompaktoreinrichtung 104 angeordnet sind und von der Umgebung abgedichtet sind. Aufgrund des umfassenden Gehäuses 116 können die Feinstoffe 154 innerhalb des Gehäuses 116 gehalten werden und gezielt ausgefiltert werden. Über entsprechende Materialschleusen können beispielsweise die Batterieabfälle 150, beispielsweise über den oben beschriebenen Steigförderer 106, in die Aufschlussvorrichtung 101 eingebracht werden. Ferner können weitere Materialschleusen an den Verladestation 121, 122, 123, 124, 125 vorgesehen werden, sodass ein Materialaustrag der separierten Reststoffe aus dem Gehäuse ausgetauscht werden kann, ohne ungewollt umweltschädliche Feinpartikel auszutragen.

Das Gehäuse 116 weist zumindest eine Absaugöffnung 119 auf, an welcher die Absaugeinrichtung 113 koppelbar ist, wobei mittels der Absaugeinrichtung 113 Luft aus dem Gehäuse als Abluft an die Umgebung abführbar ist. An der Absaugeinrichtung 113 ist insbesondere ein Luftfilter angeordnet. Insbesondere kann ferner ein inneres Gehäuse 117 bereitgestellt werden, welches insbesondere die Aufschlussvorrichtung 101 einhaust, da dort besonders viele Feinpartikel entstehen. Die gesamte Linie von der Aufschlussvorrichtung 101 (Prallreaktor) bis zur Verladung in die jeweiligen Verladestation 121, 122, 123, 124, 125 ist dicht ausgeführt und wird mittels Absaugung an mehreren Punkten im Unterdruck betrieben.

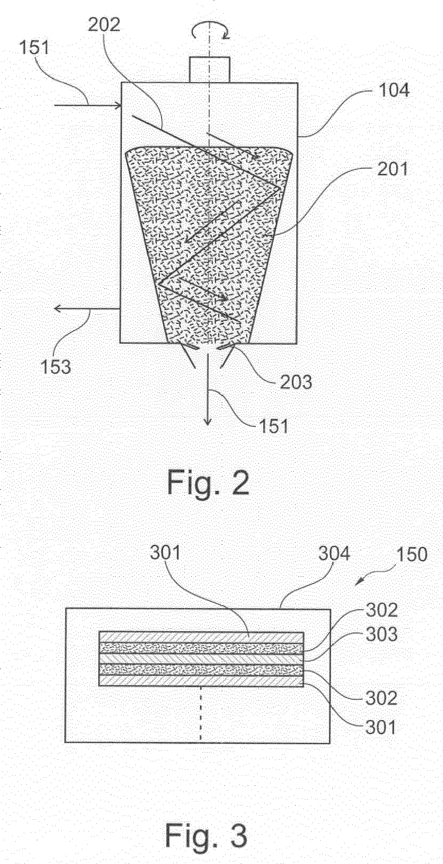

**Fig.2** zeigt eine schematische Darstellung der Faserkompaktoreinrichtung 104 gemäß einer beispielhaften Ausführungsform. Die Faserkompaktoreinrichtung 104 weist ein Lochblech 201 auf, auf welchem der Leichtstoffanteil 151, insbesondere die streifenförmigen oder flakeförmigen Kunststoffanteile des Leichtstoffanteils 151, ablagerbar ist. Der Luftstrom aus der Trenneinrichtung 103 führt den Leichtstoffanteil 151 und Aktivmaterial 153 in die Faserkompaktoreinrichtung 104. Der Luftstrom ist derart ausgerichtet, dass der Luftstrom das Lochblech 201 passiert und den Leichtstoffanteil 151 gegen das Lochblech 201 drückt und den weiteren Aktivmaterialanteil 153 durch das Lochblech 201 ausbläst. Die Faserkompaktoreinrichtung 104 weist eine Abstreifeinrichtung 202 zum Abstreichen des Leichtstoffanteils 151 von dem Lochblech 201 auf.

Der Leichtstoffanteil 151 bleibt insbesondere aufgrund seiner faserartigen Ausprägung am Lochblech 201 hängen. Ein weiterer Aktivmaterialanteil 153, wie beispielsweise oben aufgeführte Metalle, wie Nickel- oder Kobaltoxid, verbleiben im Luftstrom und passieren das Lochblech 201. Der weiterer Aktivmaterialanteil 153 kann später durch den Zyklonabscheider 112 und durch einen Filter von dem Luftstrom getrennt werden.

Durch den Druck des Luftstroms auf den Leichtstoffanteil 151, der am Lochblech 201 anhaftet, wird eine Kompaktierung erzielt. Dies wird zudem verstärkt, da entweder kontinuierlich oder sequenziell ein Abstreifen bzw. Abschaben des anhaftenden Leichtstoffanteils am Lochblech 201 mittels der Abstreifeinrichtung 202 durchgeführt wird und dieser dann gelöste und kompaktierte Leichtstoffanteil 151 an einer Verladestation 121, die an der Faserkompaktoreinrichtung 104 gekoppelt ist, gesammelt werden können.

Der stoffgutführende Luftstrom aus der Trenneinrichtung 103 tritt insbesondere oben durch den tangentialen Eintrittsstutzen in die Faserkompaktoreinrichtung 104 ein, durchströmt insbesondere das konusförmige Lochblech 201 und verlässt die Faserkompaktoreinrichtung 104 durch den Austrittsstutzen. Die Abstreifeinrichtung 202 ist als Stopfschnecke ausgebildet und streift aufgrund ihrer Rotation die Ablagerungen des Lochblechkonus 202 kontinuierlich ab und verdichtet sie. Das vorverdichtete Material des Leichtstoffanteils wird an der unteren Auslassöffnung gegen eine Membran 203 gedrückt. Durch diesen kontinuierlichen Prozess wird das Material weiter verdichtet und die Membran 203 geöffnet.

In der Verladestation 121 wird der Leichtstoffanteil 151 z.B. in einen Big Bag ausgetragen.

**Fig. 3** zeigt eine beispielhafte Darstellung eines Batterieabfalls 150. Der Batterieabfall 150 ist beispielsweise eine gebrauchte Batterie und weist zunächst ein Gehäuse 304 auf. Das Gehäuse 304 einer Batterie weist beispielsweise Stahl oder Aluminium auf. In dem Gehäuse 304 liegen die Elektrodenfolien 301, 303 vor, welche beispielsweise als Anode 301 oder Kathode 303 fungieren können. Die Elektrodenfolie 301, 303 weist dabei Aktivmaterial 153, 156 auf. Beispielsweise weist die Elektrodenfolie 301, 303 zwei Schichten von Metalloxiden (zum Beispiel Nickel, Kobalt), Metallphosphaten oder Graphit auf, die beidseitig auf eine zentrale Schicht, beispielsweise aus Aluminium und Kupfer, aufgebracht wird. Die Elektrodenfolien 301, 303, die als Kathode 303 einerseits und als Anode 301 andererseits fungieren, werden durch einen Kunststoffseparator 302 getrennt. In der verbauten Batteriezelle hat der Kunststoffseparator 302 insbesondere die Aufgabe, die Kathode 303 und die Anode 301 elektrisch voneinander zu trennen und den Ionenaustausch zu gewährleisten. Der Kunststoffanteil des Kunststoffseparators 302 bildet somit eine ionendurchlässige Membran aus. Der Kunststoffseparator 302 kann dabei bandförmig ausgebildet sein und weist einen Leichtstoffanteil 151, 160 (z.B. Polymere, z.B. Polyethylen (PE) und Polypropylen (PP)) auf.

Ergänzend ist darauf hinzuweisen, dass "umfassend" keine anderen Elemente oder Schritte ausschließt und "eine" oder "ein" keine Vielzahl ausschließt. Ferner sei darauf hingewiesen, dass Merkmale oder Schritte, die mit Verweis auf eines der obigen Ausführungsbeispiele beschrieben worden ist, auch in Kombination mit anderen Merkmalen oder Schritten anderer oben beschriebener Ausführungsbeispiele verwendet werden können. Bezugszeichen in den Ansprüchen sind nicht als Einschränkung anzusehen.

**Bezugszeichenliste:**

| | |
|---|---|
| 100 System | 150 Batterieabfall |
| 101 Aufschlussvorrichtung | 151 Leichtstoffanteil |
| 102 Ausgang Aufschlussvorrichtung | 152 Schwerstoffanteil |
| 103 Trenneinrichtung | 153 weiteres Aktivmaterial |
| 104 Faserkompaktoreinrichtung | 154 Absaugstrom |
| 105 Eingang | 155 Metallanteil |
| 106 Steigförderer | 156 Aktivmaterial |
| 107 Aufgabevorrichtung | 157 Eisenanteil |
| 108 Klappe | 158 Aluminium/Kupferanteil |
| 109 Gebläse | 159 Aluminium |
| 110Korngrößenseparationseinrichtung | 160 weiterer Leichtstoffanteil |
| 111 Metallseparationseinrichtung | |
| 112 Zyklonabscheider | 201 Lochblech |
| 113 Absaugeinrichtung | 202 Abstreifeinrichtung |
| 114 Abluft | 203 Membran |
| 116 Gehäuse | |
| 117 inneres Gehäuse | 301 Elektrodenfolie, Anode |
| 118 Zustrom Aufschlussvorrichtung | 302 Kunststoffseparator |
| 119 Absaugöffnung | 303 Elektrodenfolie, Kathode |
| 121 Verladestation Kunststoff | 304 Gehäuse |
| 122 Verladestation Aktivmaterial | |
| 123 Verladestation Stahl | |
| 124 Verladestation Kupfer/Aluminium | |
| 125 Verladestation Kupfer/Aluminium | |

## Patentansprüche

1. System (100) zum Aufbereiten von Batterieabfällen (150), das System (100) aufweisend
eine Aufschlussvorrichtung (101) zum mechanischen Aufschließen der Batterieabfälle (150) in einen, insbesondere streifenförmigen oder flakeförmigen, Leichtstoffanteil (151) und einen Schwerstoffanteil (152), wobei die Aufschlussvorrichtung (101) einen Ausgang (102) zum gemeinsamen Austragen des Leichtstoffanteils (151) und des Schwerstoffanteils (152) aufweist,
eine Trenneinrichtung (103) zum Trennen des Leichtstoffanteils (151) von dem Schwerstoffanteil (152),
wobei die Trenneinrichtung (103) mit der Aufschlussvorrichtung (101) zum Erhalt des Leichtstoffanteils (151) und des Schwerstoffanteils (152) gekoppelt ist, und
eine Faserkompaktoreinrichtung (104),
wobei die Faserkompaktoreinrichtung (104) mit der Trenneinrichtung (103) zum Erhalt des Leichtstoffanteils (151) gekoppelt ist,
wobei die Faserkompaktoreinrichtung (104) konfiguriert ist, den Leichtstoffanteil (151) unter Trennung eines weiteren Aktivmaterials (153) zu kompaktieren.

2. System (100) gemäß Anspruch 1,
wobei die mechanische Aufschlussvorrichtung (101) einen Prallreaktor, insbesondere mit einem Shredderrotor, ausbildet.

3. System (100) gemäß Anspruch 2,
wobei die Aufschlussvorrichtung (101) einen oberen Eingang (105) zum Einfüllen der Batterieabfälle (150) aufweist,
wobei die Batterieabfälle (150) insbesondere mittels eines Steigförderers (106) zu dem Eingang (105) förderbar sind.

4. System (100) gemäß einem der Ansprüche 1 bis 3,
wobei der Ausgang (102) derart verschließbar ist, insbesondere mittels einer steuerbaren Klappe (108), dass der Ausgang (102) zum Herausfördern der aufgeschlossenen Batterieabfälle (150) aus der Aufschlussvorrichtung (101) selektiv geöffnet wird,
wobei insbesondere die Klappe (108) eingerichtet ist, sequenziell zu Öffnen und für eine vorbestimmte Austragsdauer den Leichtstoffanteil (151) und den Schwerstoffanteil (152) durch den Ausgang (102) auszutragen,
wobei insbesondere die Austragsdauer 0,25 min bis 5 min, insbesondere 2 min beträgt.

5. System (100) gemäß einem der Ansprüche 1 bis 4,
wobei die Trenneinrichtung (103) hinter dem Ausgang (102) angeordnet ist.

6. System (100) gemäß einem der Ansprüche 1 bis 5,
wobei die Trenneinrichtung (103) ein Sieb aufweist zum Trennen des Leichtstoffanteils (151) von dem Schwerstoffanteil (152).

7. System (100) gemäß einem der Ansprüche 1 bis 5,
wobei die Trenneinrichtung (103) eine Strömungsklassierung ist,
wobei insbesondere die Trenneinrichtung (103) ein Gebläse (109) zum Erzeugen eines Luftstroms aufweist,
wobei das Gebläse (109) derart steuerbar ist, dass mittels des Luftstroms der Leichtstoffanteil (151) von dem Schwerstoffanteil (152) trennbar und der Leichtstoffanteil (151) zu der Faserkompaktoreinrichtung (104) beförderbar ist wobei insbesondere die Trenneinrichtung (103) ein Fallrohr aufweist, in welchem der Leichtstoffanteil (151) und der Schwerstoffanteil (152) lose, insbesondere vertikal fallend, entlang einer Förderrichtung beförderbar sind, wobei insbesondere das Gebläse (109) den Luftstrom im Wesentlich senkrecht zu der Förderrichtung derart führt, dass mittels des Luftstroms der Leichtstoffanteil (151) von dem Schwerstoffanteil (152) trennbar ist.

8. System (100) gemäß einem der Ansprüche 1 bis 7,
wobei die Faserkompaktoreinrichtung (104) ein Lochblech aufweist, auf welchem der Leichtstoffanteil (151) ablagerbar ist,
wobei ein Luftstrom aus der Trenneinrichtung (103) den Leichtstoffanteil (151) in die Faserkompaktoreinrichtung (104) transportiert, wobei der Luftstrom derart ausgerichtet ist, dass der Luftstrom das Lochblech passiert und den Leichtstoffanteil (151) gegen das Lochblech drückt und den weiteren Aktivmaterialanteil (153) durch das Lochblech ausbläst,
wobei die Faserkompaktoreinrichtung (104) eine Abstreifeinrichtung zum Abstreichen des Leichtstoffanteils (151) von dem Lochblech aufweist, oder wobei die Faserkompaktoreinrichtung (104) eine Zykloneinheit mit einem Dralltopf und einer Pressvorrichtung aufweist,
wobei ein Luftstrom aus der Trenneinrichtung (103) aufweisend den Leichtstoffanteil (151) in die Zykloneinheit einströmbar ist,
wobei der Luftstrom derart ausgerichtet ist, dass der Luftstrom in der Zykloneinheit zirkuliert und dabei den Leichtstoffanteil (151) von dem weiteren Aktivmaterialanteil (153) trennt und nach unten in den Dralltopf befördert,
wobei der Dralltopf mit der Pressvorrichtung derart gekoppelt ist, dass der Leichtstoffanteil (151) der Pressvorrichtung zuführbar ist,
wobei die Pressvorrichtung ausgebildet ist, den Leichtstoffanteil (151) zu komprimieren,
wobei der weitere Aktivmaterialanteil (153) zusammen mit dem Luftstrom aus dem Dralltopf getrennt von dem Leichtstoffanteil (151) auströmbar ist,
wobei die Pressvorrichtung insbesondere eine Kollergangpresse, eine Walzenpresse oder eine Brikettierungspresse ist.

9. System (100) gemäß einem der Ansprüche 1 bis 8, ferner aufweisend
eine Korngrößenseparationseinrichtung (110), welche mit der Trenneinrichtung (103) zum Erhalt des Schwerstoffanteils (152) gekoppelt ist, wobei die Korngrößenseparationseinrichtung (110) eingerichtet ist, einen Metallanteil (155) und einen Aktivmaterialanteil zu separieren,
wobei der Metallanteil (155) insbesondere Stahl, Aluminium, Kupfer und/oder Verbindungen derselben aufweist,
wobei der Aktivmaterialanteil insbesondere Nickel-, Kobalt-, Metalloxid, Metallphosphate, Graphit und/oder Verbindungen derselben aufweist.

10. System (100) gemäß Anspruch 9, ferner aufweisend
eine Metallseparationseinrichtung (111), welche mit der Korngrößenseparationseinrichtung (110) zum Erhalt des Metallanteils (155) gekoppelt ist,
wobei die Metallseparationseinrichtung (111) eingerichtet ist, den Metallanteil (155) zu trennen.

11. System (100) gemäß einem der Ansprüche 1 bis 10, ferner aufweisend
eine Absaugeinrichtung (113), welche derart mit der Aufschlussvorrichtung (101) gekoppelt ist, dass ein Absaugstrom (154) erzeugbar ist, welcher einen weiteren Teil des Leichtstoffanteils (160) aus der Aufschlusseinrichtung (101) absaugt
wobei insbesondere die Aufschlussvorrichtung (101) ein integriertes Trennsystem, insbesondere ein Windsichtersystem, aufweist, welches derart ausgebildet ist, dass der weitere Teil des Leichtstoffanteils (160) von dem am Ausgang (102) ausgetragenen Schwerstoffanteil (152) und Leichtstoffanteil (151) trennbar ist.

12. System (100) gemäß Anspruch 11, ferner aufweisend
einen Zyklonabscheider (112), welcher mit der Absaugeinrichtung (113) derart gekoppelt ist, sodass der Absaugstrom (154) in den Zyklonabscheider (112) einströmbar ist,
wobei der Zyklonabscheider (112) konfiguriert ist, Aktivmaterial (156) aus dem weiteren Leichtstoffanteil (160) von dem Absaugstrom (154) zu separieren,
wobei das Aktivmaterial (156) insbesondere aus Nickel-, Kobaltoxid oder deren Verbindungen bestehen
wobei insbesondere der Zyklonabscheider (112) ferner mit der Faserkompaktoreinrichtung (104) derart gekoppelt ist, dass das weiteres Aktivmaterial (153) aus der Faserkompaktoreinrichtung (104) dem Zyklonabscheider (112) zuführbar ist.

13. System (100) gemäß einem der Ansprüche 1 bis 12, ferner aufweisend
ein Gehäuse (116), in welchem zumindest die Aufschlussvorrichtung (101), die Trenneinrichtung (103) und die Faserkompaktoreinrichtung (104) angeordnet sind und von der Umgebung abgedichtet sind wobei insbesondere das Gehäuse (116) zumindest eine Absaugöffnung (119) aufweist, an welche die Absaugeinrichtung (113) koppelbar ist,
wobei insbesondere mittels der Absaugeinrichtung (113) Luft aus dem Gehäuse als Abluft (114) an die Umgebung abführbar ist,
wobei insbesondere an der Absaugeinrichtung (113) insbesondere ein Luftfilter angeordnet ist.

14. System (100) gemäß einem der Ansprüche 1 bis 13, ferner aufweisend
zumindest einen Förderer, insbesondere einen Schneckenförderer, einen Trogkettenförderer, ein Förderband, ein Rohrkettenförderer, ein Seilförderer, einen Vibrationsförderer, ein Becherwerk, einen Elevatorförderer, einen Z-Förderer, einen Wellkantenförderer oder einen Kratzkettenförderer,
wobei der Förderer zum Transport des Leichtstoffanteils (151) und des Schwerstoffanteils (152) in die Trenneinrichtung (103) zwischen dem Ausgang (102) der Aufschlusseinrichtung und der Trenneinrichtung (103) angeordnet ist.

15. Verfahren zum Aufbereiten von Batterieabfällen, das Verfahren aufweisend
mechanisches Aufschließen der Batterieabfälle (150) mittels einer Aufschlussvorrichtung (101) in einen, insbesondere streifenförmigen oder flakeförmigen, Leichtstoffanteil (151) und einen Schwerstoffanteil (152), wobei die Aufschlussvorrichtung (101) einen Ausgang (102) zum gemeinsamen Austragen des Leichtstoffanteils (151) und des Schwerstoffanteils (152) aufweist,
Trennen des Leichtstoffanteils (151) von dem Schwerstoffanteil (152) mittels einer Trenneinrichtung (103),
wobei die Trenneinrichtung (103) mit der Aufschlussvorrichtung (101) zum Erhalt des Leichtstoffanteils (151) und des Schwerstoffanteils (152) gekoppelt ist, und
Kompaktieren des Leichtstoffanteils (151) unter Trennung eines weiteren Aktivmaterials (153) mittels einer Faserkompaktoreinrichtung (104), wobei die Faserkompaktoreinrichtung (104) mit der Trenneinrichtung (103) zum Erhalt des Leichtstoffanteils (151) gekoppelt ist.
